(19) Europäisches Patentamt
European Patent Office
Office européen des brevets

(11) Veröffentlichungsnummer: **0 415 213 B1**

(12) **EUROPÄISCHE PATENTSCHRIFT**

(45) Veröffentlichungstag der Patentschrift: **13.04.94**

(51) Int. Cl.[5]: **C08F 8/32**, C09D 157/04, C09D 11/10, C09J 157/04

(21) Anmeldenummer: **90115875.8**

(22) Anmeldetag: **18.08.90**

(54) **Aminogruppen aufweisende Copolymerisate, ein Verfahren zu ihrer Herstellung und ihre Verwendung als Bindemittel oder Bindemittelkomponente.**

(30) Priorität: **01.09.89 DE 3928991**

(43) Veröffentlichungstag der Anmeldung:
**06.03.91 Patentblatt 91/10**

(45) Bekanntmachung des Hinweises auf die Patenterteilung:
**13.04.94 Patentblatt 94/15**

(84) Benannte Vertragsstaaten:
**AT BE CH DE ES FR GB IT LI NL SE**

(56) Entgegenhaltungen:
**EP-A- 0 101 962**
**DE-A- 2 534 603**
**FR-A- 2 003 004**

(73) Patentinhaber: **BAYER AG**
**D-51368 Leverkusen(DE)**

(72) Erfinder: **Wamprecht, Christian**
**Regattastrasse 20**
**D-4040 Neuss 22(DE)**
Erfinder: **Pedain, Josef, Dr.**
**Haferkamp 6**
**D-5000 Köln 80(DE)**
Erfinder: **Blum, Harald, Dr.**
**Auf dem Westkamp 1**
**D-4175 Wachtendonk 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 415 213 B1

## Beschreibung

Die Erfindung betrifft neue primäre Aminogruppen aufweisende Copolymerisate von olefinisch ungesättigten Monomeren, ein Verfahren zur Herstellung der neuen Verbindungen und ihre Verwendung als Bindemittel oder Bindemittelkomponente.

Primäre Aminogruppen aufweisende Copolymerisate von olefinisch ungesättigten Monomeren sind bereits bekannt.

Die EP-A-0 101 962 beschreibt beispielsweise Polymerisate mit primären Aminogruppen, ein Verfahren zu ihrer Herstellung und ihre Verwendung. Die Herstellung dieser aminofunktionellen Polymerisate erfolgt dergestalt, daß in einem ersten Schritt ein hydroxylhaltiger Ester aus einer $\alpha,\beta$-olefinisch ungesättigten Mono- oder Dicarbonsäure und einem zweiwertigen Alkohol, z.B. Hydroxyethylacrylat mit einem Diisocyanat in einem Äquivalentverhältnis von NCO- zu OH-Gruppen von größer als 1 : 1 umgesetzt wird. Daraus resultiert ein $\alpha,\beta$-olefinisch ungesättigtes Mono- oder Diisocyanat, welches in einem zweiten Schritt mit anderen Monomeren zu einem isocyanatfunktionellen Copolymerisat radikalisch polymerisiert wird. In einem dritten Schritt werden die Isocyanatgruppen des erhaltenen Copolymerisats mit überschüssiger Mineralsäure (konz. HCl) und Wasser unter Abspaltung von $CO_2$ in Ammoniumsalze überführt und anschließend in einem vierten Schritt durch Basenzusatz (methanolische KOH) neutralisiert. Es resultieren Copolymerisate mit freien Aminogruppen. Dieses Verfahren hat jedoch den Nachteil, daß schon bei dem ersten Schritt, der Herstellung von isocyanatfunktionellen Monomeren, keine vollständig einheitlichen 1 : 1-Addukte erhalten werden, was in dem zweiten Schritt, der Polymerisation, zu vernetzten Produkten führen kann, wenn zuvor kein aufwendiges Reinigungsverfahren durchgeführt wurde. Ein weiterer Nachteil besteht in der sehr aufwendigen Herstellung der aminofunktionellen Polymerisate mit insgesamt vier Reaktionsschritten. Weiterhin erweist sich bei diesem Verfahren als nachteilig, daß die Gefahr besteht, daß unter den drastischen Hydrolyse- und Neutralisationsbedingungen (konz. HCl, KOH) nicht nur die Hydrolyse der Isocyanatgruppen, sondern auch eine teilweise Verseifung der (Meth)acrylsäureestereinheiten stattfindet, was einen Abbau des Polymeren zur Folge hat.

Die EP-A-0 179 954 beschreibt Zweikomponenten-Beschichtungssysteme aus aminofunktionellen und epoxyfunktionellen Polyacrylatsystemen. Dabei erfolgt die Herstellung des aminofunktionellen Polymers dergestalt, daß in einem ersten Schritt unter Verwendung von (Meth)acrylsäure als funktionellem Monomer zusammen mit anderen Monomeren ein carboxylfunktionelles Copolymerisat hergestellt wird. Zur Einführung der Aminogruppen wird dieses Copolymerisat mit Propylenimin umgesetzt, wobei eine Ringöffnung unter Ausbildung von primären Aminogruppen erfolgt. Ein schwerwiegender Nachteil dieses Verfahrens besteht in der Tatsache, daß Propylenimin, wie Ethylenimin, eine äußerst gefährliche Substanz ist, die sich im Tierversuch als eindeutig krebserzeugend erwiesen hat.

In den US-Patenten 4 659 770 und 4 699 936 werden aminofunktionelle Copolymerisate beschrieben, die als Bindemittelkomponente in Zweikomponentenlacken Anwendung finden. Ihre Herstellung erfolgt dergestalt, daß zunächst aminofunktionelle (Meth)acrylatmonomere dadurch synthetisiert werden, daß Alkandioldi(meth)acrylate wie z.B. Hexandioldiacrylat in solchen Mengenverhältnissen mit Diaminen umgesetzt werden, daß 1 : 1 Addukte resultieren, welche sowohl freie Aminogruppen als auch ungesättigte (Meth)acrylatgruppen aufweisen. Diese aminofunktionellen Monomeren werden anschließend mit anderen ungesättigten Monomeren copolymerisiert, wobei aminofunktionelle Copolymerisate erhalten werden. Als nachteilig erweist sich bei diesem Verfahren, daß die Herstellung und Verarbeitung der aminofunktionellen Monomeren nicht unproblematisch ist. So kann nicht ausgeschlossen werden, daß neben den gewünschten 1 : 1-Addukten auch höhermolekulare Oligomere entstehen, die sich bei dem späteren Copolymerisationsprozeß als die Gelbildung fördernde, ungesättigte Vernetzer erweisen. Als weiterer Nachteil ist anzuführen, daß Monomere, welche zugleich eine ungesättigte, aktivierte (Meth)acrylatdoppelbindung und eine freie, primäre Aminogruppe aufweisen, nicht lagerstabil sind, weil beide Gruppierungen miteinander schon bei Raumtemperatur eine Additionsreaktion eingehen. Diese Additionsreaktion läuft bei erhöhten Temperaturen, wie z.B. den angegebenen Reaktionstemperaturen (90 - 100 °C) noch erheblich schneller ab, so daß dabei unerwünschte Nebenreaktionen ablaufen können, die gelierte Produkte zur Folge haben. Als besonders nachteilig erweist sich bei diesem Verfahren auch, daß bei radikalischen Copolymerisationsprozessen, bei denen Aminogruppen vorliegen, stets stark dunkel gefärbte Produkte entstehen, die z.B. für die Anwendung als Bindemittel für hochwertige Lacke völlig ungeeignet sind.

Es war die der Erfindung zugrundeliegende Aufgabe, neue Copolymerisate, welche primäre Aminogruppen aufweisen, bereitzustellen, die nicht mit den genannten Nachteilen des Standes der Technik behaftet sind. Die neuen Copolymerisate sollen durch Verwendung von ungefährlichen, preiswerten, allgemein zugänglichen Rohstoffen leicht und ohne Komplikationen herstellbar sein und sich in üblichen organischen Lösungsmitteln gut lösen, wobei möglichst farblose bis wenig gefärbte Polymerlösungen resultieren.

Diese Aufgabe konnte durch die Bereitstellung der nachstehend näher beschriebenen Copolymerisate gelöst werden.

Gegenstand der Erfindung sind Copolymerisate mit einem als Gewichtsmittel bestimmten Molekulargewicht Mw von 1.500 - 75.000 von olefinisch ungesättigten Verbindungen, gekennzeichnet durch einen Gehalt an primären Aminogruppen von 0,1 - 4,5 Gew.-% in Form von in die Polymerkette eingebauten Struktureinheiten der Formel (I)

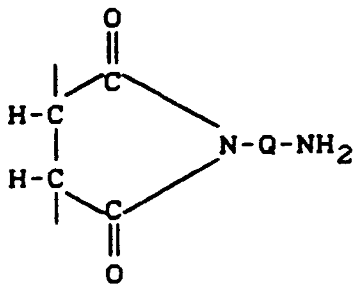

(I)

wobei

Q für einen gesättigten aliphatisch-cycloaliphatischen Kohlenwasserstoffrest steht, wie er durch Entfernung der Aminogruppen aus einem aliphatisch-cycloaliphatischen diprimären Diamin mit einer an ein primäres Kohlenstoffatom gebundenen Aminogruppe und einer an ein sekundäres oder tertiäres Kohlenstoffatom gebundenen Aminogruppe erhalten wird.

Gegenstand der Erfindung ist auch ein Verfahren zur Herstellung dieser Copolymerisate, welches dadurch gekennzeichnet ist, daß man in einem ersten Reaktionsschritt

a) 1 - 40 Gew-Teile copolymerisierbare anhydridfunktionelle Monomere

und

b) 60 - 99 Gew.-Teile sonstige copolymerisierbare Monomere der allgemeinen Formeln (II), (III) und (IV)

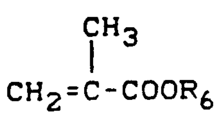 , 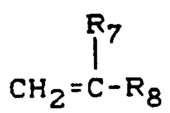 und/oder 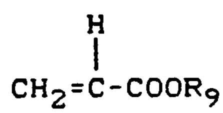

(II) (III) (IV)

wobei

$R_6$ für einen linearen oder verzweigten aliphatischen Kohlenwasserstoffrest mit 1 - 18 Kohlenstoffatomen und/oder einem Hydroxyalkylrest mit 2 bis 4 Kohlenstoffatomen steht,

$R_7$ für Wasserstoff, einen Methyl-, Ethyl-, Chlor-oder Fluorsubstituenten steht,

$R_8$ für einen aromatischen Kohlenwasserstoffrest mit 6 - 12 Kohlenstoffatomen, eine Alkoxylgruppe mit 2 - 7 Kohlenstoffatomen oder eine Aminocarbonylgruppe, die gegebenenfalls am Stickstoff, gegebenenfalls Etherbrücken aufweisende, Alkylsubstituenten mit 1 - 6 Kohlenstoffatomen tragen, steht, und

$R_9$ bezüglich seiner Bedeutung der für $R_6$ gemachten Definition entspricht, jedoch mit $R_6$ nicht identisch sein muß,

durch radikalisch initiierte Copolymerisation in ein anhydrid-, bzw. anhydrid- und hydroxyfunktionelles Copolymerisat überführt und in einem zweiten Reaktionsschritt das so erhaltene Copolymerisat durch Reaktion mit Diaminen der Formel

$H_2N\text{-}Q\text{-}NH_2$

unter Ausbildung von Struktureinheiten der Formel (I) zur Reaktion bringt,

wobei

Q die obengenannte Bedeutung hat,

die Menge des eingesetzten Diamins einem Äquivalentverhältnis von an ein primäres Kohlenstoffatom gebundenen Aminogruppen zu im Copolymerisat gebundenen Säureanhydridgruppen von mindestens 1 : 1 entspricht und

Art und Mengenverhältnisse der Reaktionspartner im übrigen so gewählt werden, daß die resultierenden Copolymerisate einen Gehalt an primären Aminogruppen von 0,1 - 4,5 Gew.-% aufweisen.

Gegenstand der Erfindung ist auch die Verwendung der neuen Copolymerisate als Bindemittel oder Bindemittelkomponente für lösungsmittelhaltige Beschichtungsmittel, Dichtmassen, Klebstoffe oder Druckfarben.

Die erfindungsgemäßen Copolymerisate enthalten 0,1 - 4,5, vorzugsweise 0,3 - 3,0 Gew.-% an primären Aminogruppen und weisen ein als Gewichtsmittel bestimmtes, nach der Methode der Gelpermeationschromatographie ermittelbares Molekulargewicht (Standard Polystyrol) von 1.500 bis 75.000, vorzugsweise 2.000 bis 50.000 und besonders bevorzugt 2.500 bis 30.000 auf. Die primären Aminogruppen liegen in den Copolymerisaten in Form von Struktureinheiten der bereits oben genannten allgemeinen Formel (I) und vorzugsweise in Form von in die Polymerketten eingebauten Struktureinheiten der allgemeinen Formel (V)

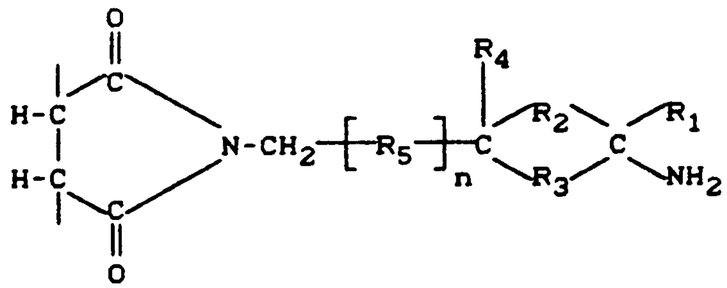

(V)

vor, wobei

$R_1$ für Wasserstoff oder einen Alkylrest mit 1 - 4 Kohlenstoffatomen, vorzugsweise ein Methylrest steht,

$R_2$ und $R_3$ für gleiche oder verschiedene Reste stehen und jeweils einen zweiwertigen gesättigten aliphatischen Kohlenwasserstoffrest mit 1 - 6, vorzugsweise 1 - 5 Kohlenstoffatomen, bedeuten, wobei die Summe der Anzahl der Kohlenstoffatome der Reste $R_2$ und $R_3$ 3 - 8, vorzugsweise 4 - 6, beträgt,

$R_4$ für Wasserstoff oder einen Alkylrest mit 1 - 4 Kohlenstoffatomen, vorzugsweise für Wasserstoff oder einen Methylrest steht,

$R_5$ für einen zweiwertigen, gesättigten aliphatischen Kohlenwasserstoffrest mit 1 - 4, insbesondere 1 - 3 Kohlenstoffatomen steht und

n für 0 oder 1 steht.

Die Herstellung der erfindungsgemäßen Copolymerisate kann beispielsweise nach dem erfindungsgemäßen Verfahren erfolgen. Hierbei wird in der ersten Reaktionsstufe zunächst ein intramolekulares Carbonsäureanhydridgruppen aufweisendes Copolymerisat A') hergestellt, welches anschließend in einer zweiten Stufe durch Umsetzung mit geeigneten Diaminen in die erfindungsgemäßen aminofunktionellen Copolymerisate A) überführt wird.

Zur Herstellung der Copolymerisate A') wird vorzugsweise ein Monomerengemisch verwendet, welches aus

a) 1 - 40, vorzugsweise 2 - 30 Gew.-Teilen copolymerisierbaren, Anhydridgruppen enthaltenden Monomeren und

b) 60 - 99, vorzugsweise 70 - 98 Gew.-Teilen sonstigen copolymerisierbaren Monomeren der allgemeinen Formeln (II), (III) und (IV)

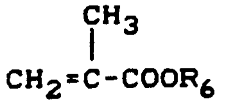 ,

(II)

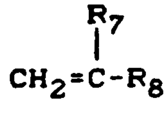

(III)

und/oder

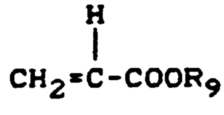

(IV)

besteht, wobei

$R_6$ für einen linearen oder verzweigten aliphatischen Kohlenwasserstoffrest mit 1 bis 18 Kohlenstoffatomen und/oder einen Hydroxyalkylrest mit 2 - 4 Kohlenstoffatomen steht,

$R_7$ für Wasserstoff, einen Methyl-, Ethyl-, Chlor- oder Fluorsubstituenten steht,

$R_8$ für einen aromatischen Kohlenwasserstoffrest mit 6 - 12 Kohlenstoffatomen (hierunter sollen auch aliphatische Substituenten aufweisende aromatische Reste verstanden werden), eine Alkoxygruppe mit 2 - 7 Kohlenstoffatomen oder eine Aminocarbonylgruppe, die gegebenenfalls am Stickstoff, gegebenenfalls Etherbrücken aufweisende, Alkylsubstituenten mit 1 - 6 Kohlenstoffatomen tragen, steht, und

$R_9$ bezüglich seiner Bedeutung der für $R_6$ gemachten Definition entspricht, mit $R_6$ jedoch nicht identisch zu sein braucht.

Typische Beispiele für Monomere a) sind z.B. Itaconsäureanhydrid, Maleinsäureanhydrid, wobei Maleinsäureanhydrid bevorzugt ist.

Unter den Monomeren b) sind insbesondere solche der genannten allgemeinen Formeln bevorzugt, für welche

$R_6$ für einen linearen oder verzweigten aliphatischen Kohlenwasserstoffrest mit 1 - 8 Kohlenstoffatomen und/oder einen Hydroxyalkylrest mit 2 - 4 Kohlenstoffatomen steht,

$R_7$ für Wasserstoff oder eine Methylgruppe steht,

$R_8$ für einen aromatischen Kohlenwasserstoffrest mit 6 - 12 Kohlenstoffatomen (hierunter sollen auch aliphatische Substituenten aufweisende aromatische Reste verstanden werden), eine Alkoxygruppe mit 2 - 7 Kohlenstoffatomen oder eine Aminocarbonylgruppe, die gegebenenfalls am Stickstoff einen, gegebenenfalls Etherbrücken aufweisenden, Alkylsubstituenten mit 1 - 6 Kohlenstoffatomen trägt, steht, und

$R_9$ bezüglich seiner Bedeutung der zuletzt für $R_6$ gemachten Definition entspricht.

Typische Beispiele für geeignete bzw. bevorzugte Reste $R_6$ bzw. $R_9$ sind Methyl-, Ethyl-, n-Propyl, Isopropyl-, n-Butyl-, Isobutyl-, n-Pentyl-, n-Hexyl-, 2-Ethylhexyl-, n-Octyl-, n-Decyl- oder n-Dodecyl- 2-Hydroxyethyl-, 3-Hydroxypropyl- oder 2-Hydroxypropyl- und 4-Hydroxybutyl.

Typische Beispiele für geeignete bzw. bevorzugte Reste $R_8$ sind Wasserstoff-, Methyl-, Ethyl-, Chlor- und Fluorreste.

Typische Beispiele für geeignete bzw. bevorzugte Reste $R_8$ sind aliphatische Reste der soeben für $R_6$ beispielhaft genannten Art, mit Ausnahme von Methyl- und Hydroxyalkylresten und außerdem Phenyl-, Cyclohexyl-, 2-, 3- und 4-Methylphenyl-, Propoxy-, n-Butoxy- oder Aminocarbonyl-Reste.

Bei der Herstellung der Copolymerisate A') können grundsätzlich beliebige Gemische von Monomeren a) einerseits und b) andererseits zum Einsatz gelangen, wobei jedoch solche Copolymerisate A') bevorzugt sind, die aus einem Monomerengemisch hergestellt werden, dessen Komponente b) sich zu 5 - 50 Gew.-% aus Estergruppen-freien Monomeren der oben genannten allgemeinen Formel zusammensetzen, die bevorzugt ihrerseits zu 50 - 100 Gew.-% aus Styrol bestehen.

Die Herstellung der Copolymerisate A') kann durch Copolymerisation der beispielhaft genannten Monomeren nach üblichen radikalischen Polymerisationsverfahren erfolgen, wie beispielsweise Masse- oder Lösungspolymerisation.

Dabei werden die Monomeren bei Temperaturen von 60 - 200 °C, vorzugsweise 80 - 160 °C (in Anwesenheit von Hydroxylgruppen aufweisenden Monomeren vorzugsweise bei 80 - 140 °C) in Gegenwart von Radikalbildnern und gegebenenfalls Molekulargewichtsreglern copolymerisiert.

Die Copolymerisation wird vorzugsweise in inerten Lösungsmitteln bei Feststoffgehalten von 30 - 95 Gew.-% durchgeführt. Geeignete Lösungsmittel sind beispielsweise Ester wie Propylacetat, Butylacetat, Isobutylacetat, sec.-Butylacetat, Amylacetat, Hexylacetat, Benzylacetat, Ethylpropionat, Butylpropionat, Isobutylisobutyrat, Ethoxypropylacetat, Propylenglykolmethyletheracetat, Oxohexylacetat (®Exxate 600), Oxoheptylacetat (®Exxate 700), z.B. Ether wie Diisopropylether, Dibutylether, Dioxan, Dimethyldiglykol, Kohlenwasserstoffe wie Benzin, Terpentinöl, Solventnaphta, Terpene, Hexan, Heptan, Octan, Cyclohexan, Toluol, Xylol, Ethylbenzol, Ketone wie Methylethylketon, Methylisobutylketon, Methyl-n-amylketon, Methylisoamylketon, Diethylketon, Ethylbutylketon, Diisopropylketon, Cyclohexanon, Methylcyclohexanon, Isophoron oder beliebige Gemische derartiger Lösemittel.

Bevorzugt sind solche Lösemittel, deren Siedepunkt bei Normalbedingungen ≧ 110 °C beträgt und solche Lösemittel, die mit Wasser ein Azeotrop bilden wie z.B. Xylol, Butylacetat, Solventnaphta, Oxohexylacetat.

Die Copolymerisation kann kontinuierlich oder diskontinuierlich erfolgen. Üblicherweise wird in einem Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so

chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation bei einem Überdruck von 0 - 20 bar. Die Initiatoren werden in Mengen von 0,05 - 15 Gew.-%, bezogen auf die Gesamtmenge der Monomeren, eingesetzt.

Geeignete Initiatoren sind übliche Radikalstarter wie z.B. aliphatische Azoverbindungen wie Azodiisobuttersäurenitril, Azo-bis-2-methylvaleronitril, 1,1'-Azo-bis-1-cyclohexannitril und 2,2'-Azo-bis-isobuttersäure-alkylester; symmetrische Diacylperoxide, z.B. Acetyl-, Propionyl- oder Butyrylperoxid, mit Brom-, Nitro-, Methyl- oder Methoxygruppen substituierte Benzoylperoxide, Laurylperoxide; symmetrische Peroxidicarbonate, z.B. Diethyl-, Diisopropyl-, Dicyclohexyl- sowie Dibenzoylperoxidicarbonat; tert.-Butylperoxy-2-ethylhexanoat, tert.-Butylperbenzoat oder tert.-Butylphenylperacetat sowie Peroxycarbonate wie z.B. tert.-Butyl-N-(phenylperoxy)carbonat oder tert.-Butyl-N-(2-, 3- oder 4-chlorphenylperoxy)-carbonat; Hydroperoxide wie beispielsweise tert.-Butylhydroperoxid Cumolhydroperoxid; Dialkylperoxide wie Di-cumylperoxid; tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecyl-mercaptan, n-Dodecylmercaptan oder Diisopropylxanthogendisulfid. Die Regler können in Mengen von 0,1 - 10 Gew.-%, bezogen auf die Gesamtmenge der Monomeren, zugegeben werden.

Die bei der Copolymerisationsreaktion anfallenden Lösungen der Copolymerisate A') können dann ohne weitere Aufarbeitung der Modifizierungsreaktion zugeführt werden Selbstverständlich ist es jedoch auch möglich, die Copolymerisate destillativ von gegebenenfalls noch vorliegenden Restmengen an nicht umgesetzten Monomeren und gegebenenfalls Lösungsmittel zu befreien und die als Destillationsrückstand vorliegenden Copolymerisate A') zu modifizieren.

Zur Herstellung der aminofunktionellen Copolymerisate A) werden die Carbonsäureanhydridgruppen enthaltenden Copolymerisate A') mit geeigneten Diaminen der Formel (VI)

$H_2N\text{-}Q\text{-}NH_2$ (VI)

vorzugsweise der Formel (VII)

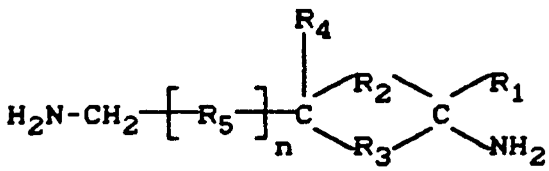 (VII)

modifiziert, wobei

Q, $R_1$, $R_2$, $R_3$, $R_4$, $R_5$ und n die bereits oben genannte Bedeutung bzw. bevorzugte Bedeutung haben.

Besonders gut geeignete derartige Diamine sind z.B. 1-Amino-1-methyl-4(3)-aminomethylcyclohexan, welches im allgemeinen als Gemisch der 4- und 3-Aminomethyl-Isomeren vorliegt, 1-Amino-1-methyl-4-(4-aminobut-2-yl)-cyclohexan, 1-Amino-1,2,2-trimethyl-3-(2-aminoethyl)-cyclopentan oder 1-Amino-3-aminomethyl-3,5,5-trimethylcyclohexan (IPDA).

Geeignet sind jedoch auch z.B. 1-Amino-1-n-butyl-3-(4-aminobut-1-yl)-cyclopentan, 1-Amino-1-ethyl-4-n-butyl-4-(4-aminobut-1-yl)-cyclohexan oder 1-Amino-1,2-dimethyl-3-ethyl-3-aminomethylcyclopentan.

Die Herstellung der beispielhaft genannten Diamine mit einer an ein primäres Kohlenstoffatom gebundenen Aminogruppe und einer an ein tertiäres Kohlenstoffatom gebundenen Aminogruppe ist beispielsweise in der EP-A-0 153 561 (= US-A-4 613 685) beschrieben.

Zur Durchführung des erfindungsgemäßen Modifizierungsverfahrens werden die anhydridfunktionellen Copolymerisate A') und die Diamine in solchen Mengen eingesetzt, die einem Äquivalentverhältnis von an ein primäres Kohlenstoffatom gebundenen Aminogruppen zu Säureanhydridgruppen von mindestens 1 : 1, im allgemeinen 1 : 1 bis 2 : 1, vorzugsweise 1 : 1 bis 1,5 : 1 und besonders bevorzugt von 1 : 1 bis 1,2 : 1, entsprechen.

Geeignete Lösungsmittel für die Modifizierungsreaktion, bei der zunächst eine Ringöffnung des Anhydridringes durch die an das primäre Kohlenstoffatom gebundene Aminogruppe unter Ausbildung einer Halbamidstruktur erfolgt, und bei der anschließend wieder eine Ringschlußreaktion unter Wasserabspaltung und Ausbildung einer Imidgruppe abläuft, sind z.B. die bei der Herstellung der anhydridfunktionellen Copolymerisate A') bevorzugt verwendeten Lösungsmittel.

Bei dem erfindungsgemäßen Verfahren wird das Diamin, das auch aus einem Gemisch von mehreren Diaminen der genannten Art bestehen kann, gegebenenfalls zusammen mit geeigneten Lösungsmitteln vorgelegt, auf Temperaturen ≧ 80 °C erhitzt und dann bei Temperaturen von 80 bis 200 °C, bevorzugt bei 100 bis 150 °C, das gelöste anhydridfunktionelle Copolymerisat zudosiert. Dabei kann die Reaktionsführung so gewählt werden, daß parallel zur Zugabe des Polymerisats das Reaktionswasser am Wasserabscheider azeotrop abdestilliert wird. Nach einer Verfahrensvariante kann auch zunächst die gesamte Menge anhydridfunktionellen Copolymerisats zugegeben und im Anschluß daran das Reaktionswasser abgespalten und, vorzugsweise azeotrop, abdestilliert werden.

Die Wasserabspaltung wird bei 110 bis 200 °C, vorzugsweise bei 120 bis 150 °C so lange durchgeführt, bis entweder die theoretische Wassermenge abgespalten ist, oder kein Wasser mehr abgespalten wird. Die Wasserabspaltung kann z.B. durch einen Inertgasstrom, der entweder durch die Reaktionsmischung geleitet oder übergeleitet wird, beschleunigt werden.

Nach Abschluß der Modifizierungsreaktion kann, falls erforderlich, überschüssiges Diamin, bevorzugt azeotrop mit einem geeigneten Lösungsmittel wie z.B. Xylol, Butylacetat, Solvent Naphta, Oxohexylacetat, durch kurzes Andestillieren aus dem Endprodukt entfernt werden.

Die Molekulargewichte Mw der aminofunktionellen Copolymerisate A) entsprechen in etwa den durch Gelpermeationschromatographie (Standard Polystyrol) ermittelten Molekulargewichten Mw der anhydridfunktionellen Copolymerisate A'), erhöht um das berechnete Molekulargewicht der eingesetzten Diamine, abzüglich der abgespaltenen Wassermenge.

Die erfindungsgemäßen, aminofunktionellen Copolymerisate A) sind in organischen Lösungsmitteln gut löslich.

Sie können z.B. als Bindemittel oder Bindemittelkomponente in lösungsmittelhaltigen Lacken, Beschichtungsmitteln, Dichtmassen, Klebstoffen oder Druckfarben eingesetzt werden.

In den nachfolgenden Beispielen beziehen sich alle Angaben in "Teilen" und "Prozent", falls nicht anders vermerkt, auf das Gewichte.

## Beispiele

### Beispiel 1

Allgemeine Herstellvorschrift für die Anhydridgruppen enthaltenden Copolymerisate $A'_1$ bis $A'_{10}$

In einem 4-l-Reaktionsgefäß mit Rühr-, Kühl- und Heizvorrichtung wird Teil I vorgelegt und auf Reaktionstemperatur aufgeheizt. Dann werden parallel Teil II (Zugabe über einen Zeitraum von insgesamt 2 Stunden) und Teil III (Zugabe über einen Zeitraum von insgesamt 2,5 Stunden) zudosiert. Anschließend wird 2 Stunden bei der Reaktionstemperatur nachgerührt.

Die Reaktionstemperaturen und die Zusammensetzungen der Teile I bis III sind in Tabelle 1, zusammen mit den Kenndaten der erhaltenen Copolymerisate A') aufgeführt.

**Tabelle I** (Mengenangaben in g)

| Copolymerisate | A'1 | A'2 | A'3 | A'4 | A'5 | A'6 | A'7 | A'8 | A'9 | A'10 |
|---|---|---|---|---|---|---|---|---|---|---|
| **Teil I** | | | | | | | | | | |
| Xylol | 1.200 | 1.200 | 1.200 | 1.200 | 1.200 | 1.200 | 1.200 | 1.200 | 1.200 | 1.200 |
| **Teil II** | | | | | | | | | | |
| Ethylacrylat | 279 | - | - | - | - | - | 312 | - | - | - |
| Butylacrylat | - | - | - | 657 | - | - | - | - | - | 470 |
| 2-Ethylhexylacrylat | 328 | - | - | - | - | - | - | 837 | - | - |
| Methylmethacrylat | 493 | 411 | - | 263 | - | - | - | - | - | 34 |
| Butylmethacrylat | - | - | 903 | - | - | 903 | 575 | - | 862 | - |
| 2-Ethylhexylmeth-acrylat | - | 591 | - | - | 903 | - | - | - | - | - |
| Styrol | 493 | 575 | 657 | 624 | 624 | 616 | 624 | 657 | 616 | 718 |
| Maleinsäureanhydrid | 49 | 66 | 82 | 99 | 115 | 123 | 131 | 148 | 164 | 34 |
| Hydroxypropylmeth-acrylat | - | - | - | - | - | - | - | - | - | 386 |
| **Teil III** | | | | | | | | | | |
| tert. Butylperoxy-2-ethylhexanoat (70%ig) | 98 | 98 | 98 | 98 | 98 | 98 | 98 | 98 | 98 | 98 |
| Xylol | 60 | 59 | 60 | 59 | 60 | 60 | 60 | 60 | 60 | 60 |
| Polymerisations-temperatur (°C) | 125 | 125 | 125 | 125 | 125 | 125 | 125 | 125 | 125 | 125 |
| Festgehalt (%) | 55,6 | 55,9 | 55,4 | 55,2 | 55,5 | 55,3 | 54,7 | 54,6 | 55,7 | 55,5 |
| Viskosität (23°C, mPa.s) | 274 | 512 | 590 | 324 | 280 | 787 | 371 | 198 | 1193 | 1049 |

Beispiel 2

Allgemeine Herstellvorschrift für die Umsetzung der anhydridfunktionellen Copolymerisate $A'_1$ - $A'_{10}$ mit Diaminen zu den aminofunktionellen Copolymerisaten $A_1$ - $A_{10}$.

In einem 1-l-Reaktionsgefäß mit Rühr-, Kühl- und Heizvorrichtungen wird Teil I vorgelegt und auf Reaktionstemperatur aufgeheizt. Anschließend wird Teil II innerhalb 1,5 Stunden unter Rühren zudosiert. Nach Zugabe von Teil II wird auf Rückflußtemperatur aufgeheizt und so lange am Wasserabscheider erhitzt,

bis die theoretische Menge Wasser abgespalten ist, bzw. bis sich kein Wasser mehr abspaltet. Danach kann das entstandene aminofunktionelle Copolymerisat noch durch Abdestillieren von Lösungsmittel auf den jeweils gewünschten Festgehalt eingestellt werden.

Die Zusammensetzungen der Teile I und II sowie die Reaktionstemperaturen sind zusammen mit den Kenndaten der erhaltenen aminofunktionellen Copolymerisate in Tabelle 2 aufgeführt.

**Tabelle II** (Mengenangaben in g)

| aminofunktionelles Copolymerisat | $A_1$ | $A_2$ | $A_3$ | $A_4$ | $A_5$ | $A_6$ | $A_7$ | $A_8$ | $A_9$ | $A_{10}$ |
|---|---|---|---|---|---|---|---|---|---|---|
| **Teil I** | | | | | | | | | | |
| Xylol | 200 | 200 | 200 | 200 | 200 | 200 | 200 | 200 | 200 | 200 |
| 1-Amino-1-methyl-4(3)-aminomethyl-cyclohexan | - | - | 24 | 29 | 33 | 36 | 38 | 43 | 48 | 10 |
| 1-Amino-3-amino-methyl-3,5,5-tri-methylcyclohexan | 17 | 22 | - | - | - | - | - | - | - | - |
| **Teil II** | | | | | | | | | | |
| Copolymerisat | 500 A'1 | 500 A'2 | 500 A'3 | 500 A'4 | 500 A'5 | 500 A'6 | 500 A'7 | 500 A'8 | 500 A'9 | 500 A'10 |
| Reaktionstemperatur (°C) | 100 | 120 | 100 | 100 | 100 | 100 | 100 | 100 | 100 | 100 |
| abgespaltene Wassermenge | 1,4 | 1,9 | 2,2 | 3,0 | 3,3 | 3,4 | 3,8 | 4,5 | 4,8 | 1,0 |
| abdestillierte Xylolmenge | 225 | 185 | 225 | 215 | 115 | 110 | 110 | 230 | 205 | 235 |
| Festgehalt (%) | 59,7 | 54,8 | 60,1 | 59,6 | 50,6 | 50,2 | 50,1 | 61,3 | 60,0 | 60,1 |
| Visk. (23°C, mPa.s) | 7674 | 33790 | 4200 | 12100 | 29100 | 23800 | 13500 | 54200 | 5750 | 62870 |
| Gehalt an $NH_2$-Gruppen bez. auf Festharz (%) | 0,44 | 0,56 | 0,76 | 0,91 | 1,04 | 1,11 | 1,18 | 1,32 | 1,42 | 0,33 |

## Patentansprüche

1. Copolymerisate mit einem als Gewichtsmittel bestimmten Molekulargewicht Mw von 1.500 - 75.000 von olefinisch ungesättigten Verbindungen, gekennzeichnet durch einen Gehalt an primären Aminogruppen von 0,1 - 4,5 Gew.-% in Form von in die Polymerkette eingebauten Struktureinheiten der Formel (I)

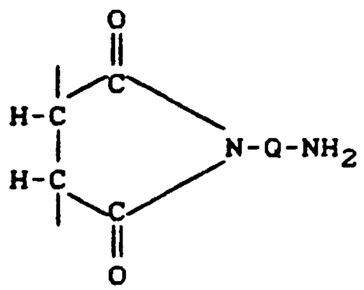

(I)

wobei

Q für einen gesättigten aliphatisch-cycloaliphatischen Kohlenwasserstoffrest steht, wie er durch Entfernung der Aminogruppen aus einem aliphatisch-cycloaliphatischen diprimären Diamin mit einer an ein primäres Kohlenstoffatom gebundenen Aminogruppe und einer an ein sekundäres oder tertiäres Kohlenstoffatom gebundenen Aminogruppe erhalten wird.

2. Copolymerisate gemäß Anspruch 1, gekennzeichnet durch einen Gehalt an primären Aminogruppen von 0,3 - 3,0 Gew.-% in Form von in die Polymerkette eingebauten Struktureinheiten der Formel (V)

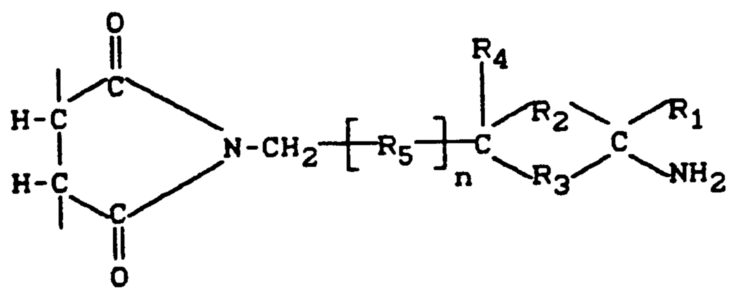

(V)

in welcher

| | |
|---|---|
| $R_1$ | für Wasserstoff oder einen Alkylrest mit 1 - 4 Kohlenstoffatomen steht, |
| $R_2$ und $R_3$ | für gleiche oder verschiedene Reste stehen und jeweils zweiwertige gesättigte Kohlenwasserstoffreste mit 1 - 6 Kohlenstoffatomen bedeuten, wobei die Summe der Anzahl der Kohlenstoffatome dieser Reste 3 - 8 beträgt, |
| $R_4$ | für Wasserstoff oder einen Alkylrest mit 1 - 4 Kohlenstoffatomen steht, |
| $R_5$ | für einen zweiwertigen, gesättigten Kohlenwasserstoffrest mit 1 - 4 Kohlenstoffatomen steht und |
| n | für 0 oder 1 steht. |

3. Copolymerisate gemäß Anspruch 2, gekennzeichnet durch einen Gehalt an primären Aminogruppen von 0,3 - 3,0 Gew.-% in Form von in die Polymerkette eingebauten Struktureinheiten der in Anspruch 2 genannten Formel, wobei

| | |
|---|---|
| $R_1$ | für Wasserstoff oder einen Methylrest steht, |
| $R_2$ und $R_3$ | für gleiche oder verschiedene Reste stehen und jeweils einen zweiwertigen gesättigten Kohlenwasserstoffrest mit 1 - 5 Kohlenstoffatomen bedeuten, wobei die Summe der Anzahl der Kohlenstoffatome dieser Reste 4 - 6 beträgt, |
| $R_4$ | für Wasserstoff oder einen Methylrest steht, |

| | |
|---|---|
| $R_5$ | für einen zweiwertigen gesättigten aliphatischen Kohlenwasserstoffrest mit 1 - 3 Kohlenstoffatomen steht und |
| n | für 0 oder 1 steht. |

**4.** Verfahren zur Herstellung von Copolymerisaten gemäß Anspruch 1, dadurch gekennzeichnet, daß man in einem ersten Reaktionsschritt

a) 1 - 40 Gew.-Teile copolymerisierbare anhydridfunktionelle Monomere

und

b) 60 - 99 Gew.-Teile sonstige copolymerisierbare Monomere der allgemeinen Formeln (II), (III) und (IV)

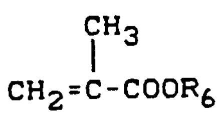 ,
(II)

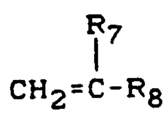
(III)

und/oder

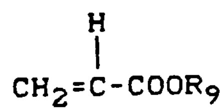
(IV)

wobei

| | |
|---|---|
| $R_6$ | für einen linearen oder verzweigten aliphatischen Kohlenwasserstoffrest mit 1 - 18 Kohlenstoffatomen und/oder einem Hydroxyalkylrest mit 2 bis 4 Kohlenstoffatomen steht, |
| $R_7$ | für Wasserstoff, einen Methyl-, Ethyl-, Chlor- oder Fluorsubstituenten steht, |
| $R_8$ | für einen aromatischen Kohlenwasserstoffrest mit 6 - 12 Kohlenstoffatomen, eine Alkoxylgruppe mit 2 - 7 Kohlenstoffatomen oder eine Aminocarbonylgruppe, die gegebenenfalls am Stickstoff, gegebenenfalls Etherbrücken aufweisende, Alkylsubstituenten mit 1 - 6 Kohlenstoffatomen tragen, steht, und |
| $R_9$ | bezüglich seiner Bedeutung der für $R_6$ gemachten Definition entspricht, jedoch mit $R_6$ nicht identisch sein muß, |

durch radikalisch initiierte Copolymerisation in ein anhydrid-, bzw. anhydrid- und hydroxyfunktionelles Copolymerisat überführt und in einem zweiten Reaktionsschritt das so erhaltene Copolymerisat durch Reaktion mit Diaminen der Formel (VI)

$H_2N\text{-}Q\text{-}NH_2$ (VI)

unter Ausbildung von Struktureinheiten der in Anspruch 1 genannten Formel zur Reaktion bringt, wobei

Q die in Anspruch 1 genannte Bedeutung hat,

die Menge des eingesetzten Diamins einem Äquivalentverhältnis von an ein primäres Kohlenstoffatom gebundenen Aminogruppen zu im Copolymerisat gebundenen Säureanhydridgruppen von mindestens 1 : 1 entspricht und

Art und Mengenverhältnisse der Reaktionspartner im übrigen so gewählt werden, daß die resultierenden Copolymerisate einen Gehalt an primären Aminogruppen von 0,1 - 4,5 Gew.-% aufweisen.

**5.** Verfahren gemäß Anspruch 4, dadurch gekennzeichnet, daß man als Diamine solche der allgemeinen Formel (VII)

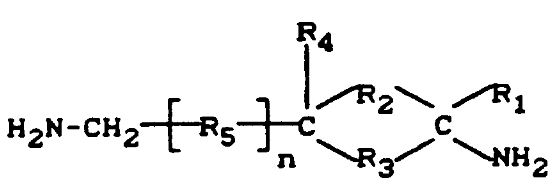
(VII)

verwendet, wobei

$R_1$, $R_2$, $R_3$, $R_4$, $R_5$ und n    die in Anspruch 2 genannte Bedeutung haben.

6. Verfahren gemäß Anspruch 4 und 5, dadurch gekennzeichnet, daß man als Diamin 1-Amino-3-aminomethyl-3,5,5-trimethyl-cyclohexan oder das aus 1-Amino-1-methyl-4-aminomethylcyclohexan und 1-Amino-1-methyl-3-aminomethylcyclohexan bestehende Isomerengemisch verwendet.

7. Verfahren gemäß Anspruch 4 - 6, dadurch gekennzeichnet, daß man als anhydridfunktionelles Monomer Maleinsäureanhydrid verwendet.

8. Verwendung der Copolymerisate gemäß Anspruch 1 - 3 als Bindemittel oder Bindemittelkomponente für lösungsmittelhaltige Beschichtungsmittel, Dichtmassen, Klebstoffe oder Druckfarben.

**Claims**

1. Copolymers having a weight average molecular weight Mw in the range from 1500 to 75,000 of olefinically unsaturated compounds, characterized by a content of primary amino groups of 0.1 to 4.5% by weight in the form of structural units incorporated in the polymer chain and corresponding to formula (I)

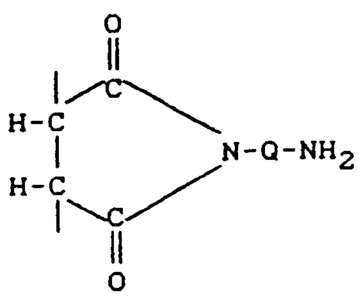

(I)

in which

Q is a saturated aliphatic-cycloaliphatic hydrocarbon radical of the type obtained by removal of the amino groups from an aliphatic-cycloaliphatic diprimary diamine containing an amino group attached to a primary carbon atom and an amino group attached to a secondary or tertiary carbon atom.

2. Copolymers as claimed in claim 1, characterized by a content of primary amino groups of 0.3 to 3.0% by weight in the form of structural units incorporated in the polymer chain and corresponding to general formula (V)

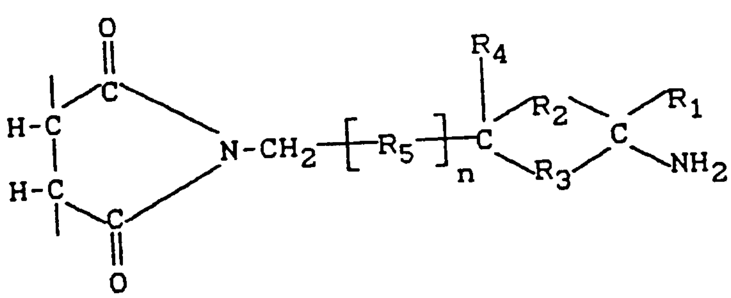

(V)

in which

$R_1$ is hydrogen or a $C_{1-4}$ alkyl radical,

$R_2$ and $R_3$ may be the same or different and each represent a difunctional, saturated hydrocarbon radical containing 1 to 6 carbon atoms, the sum of the number of carbon atoms in these radicals being from 3 to 8,

$R_4$ is hydrogen or a $C_{1-4}$ alkyl radical,

$R_5$ is a difunctional, saturated hydrocarbon radical containing 1 to 4 carbon atoms and

n is 0 or 1.

**3.** Copolymers as claimed in claim 2, characterized by a content of primary amino groups of 0.3 to 3.0% by weight in the form of structural units incorporated in the polymer chain corresponding to the formula in claim 2 in which

$R_1$ is hydrogen or a methyl radical,

$R_2$ and $R_3$ may be the same or different and each represent a difunctional, saturated $C_{1-5}$ hydrocarbon radical, the sum of the number of carbon atoms in these radicals being from 4 to 6,

$R_4$ is hydrogen or a methyl radical,

$R_5$ is a difunctional, saturated, aliphatic $C_{1-3}$ hydrocarbon radical and

n = 0 or 1.

**4.** A process for the production of the copolymers claimed in claim 1, characterized in that, in a first reaction step,

a) 1 - 40 parts by weight copolymerizable anhydridefunctional monomers

and

b) 60 to 99 parts by weight other copolymerizable monomers corresponding to general formulae (II), (III) and (IV)

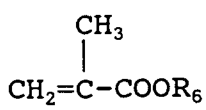 ,
(II)

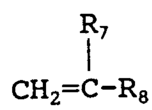
(III)

and/or

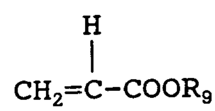
(IV)

in which

$R_6$ is a linear or branched aliphatic $C_{1-18}$ hydrocarbon radical and/or a $C_{2-4}$ hydroxyalkyl radical,

$R_7$ is hydrogen, a methyl, ethyl, chlorine or fluorine substituent,

$R_8$ is an aromatic $C_{6-12}$ hydrocarbon radical, a $C_{2-7}$ alkoxyl group or an aminocarbonyl group optionally bearing $C_{1-6}$ alkyl substituents optionally comprising ether bridges at the nitrogen and

$R_9$ corresponds in its meaning to the definition given for $R_6$, but need not be identical with $R_6$,

by radical-initiated copolymerisation in an anhydride-functional or anhydride- and hydroxyfunctional copolymer and, in a second reaction step, the copolymer thus obtained is reacted with diamines corresponding to the following formula

$H_2N\text{-}Q\text{-}NH_2$

where Q is as defined above,

with formation of structural units corresponding to formula (I),

the quantity in which the diamine is used corresponding to an equivalent ratio of amino groups attached to a primary carbon atom to acid anhydride groups bound in the copolymer of at least 1:1 and

the type of reactants and the quantitative ratios in which they are used being selected so that the resulting copolymers contain from 0.1 to 4.5% by weight primary amino groups.

**5.** A process as claimed in claim 4, characterized in that the diamines used correspond to general formula (VII)

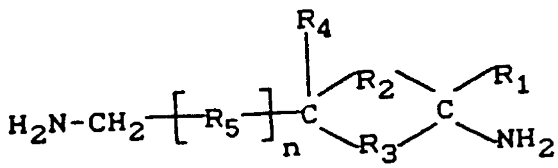

(VII)

in which

$R_1$, $R_2$, $R_3$, $R_4$, $R_5$ and n are as defined in claim 2.

6. A process as claimed in claims 4 and 5, characterized in that the diamine is 1-amino-3-aminomethyl-3,5,5-trimethyl cyclohexane or the isomer mixture consisting of 1-amino-1-methyl-4-aminomethyl cyclohexane and 1-amino-1-methyl-3-aminomethyl cyclohexane.

7. A process as claimed in claims 4 to 6, characterized in that maleic anhydride is used as the anhydride-functional monomer.

8. The use of the copolymers claimed in claims 1 to 3 as a binder or binder component for solvent-containing coating compositions, sealing compounds, adhesives or printing inks.

**Revendications**

1. Copolymères ayant un poids moléculaire, déterminé en moyenne en poids, Mw de 1 500 à 75 000, de composés à insaturation oléfinique, caractérisés en ce qu'ils contiennent de 0,1 à 4,5 % en poids de groupes amino primaires sous la forme de motifs de structure, incorporés dans la chaîne polymère, répondant à la formule I

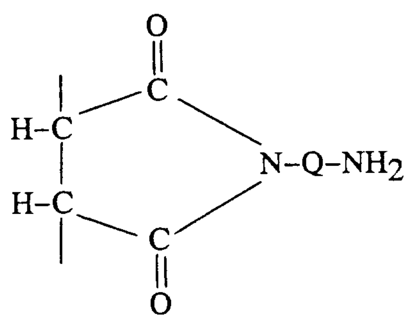

(I)

dans laquelle

Q représente un radical hydrocarboné aliphatique-cycloaliphatique saturé tel qu'obtenu par élimination des groupes amino d'une diamine diprimaire aliphatique-cycloaliphatique ayant un groupe amino fixé sur un atome de carbone primaire et un groupe amino fixé sur un atome de carbone secondaire ou tertiaire.

2. Copolymères selon la revendication 1, caractérisés en ce qu'ils contiennent de 0,3 à 3,0 % en poids de groupes amino primaires sous la forme de motifs de structure incorporés dans la chaîne polymère, de formule V

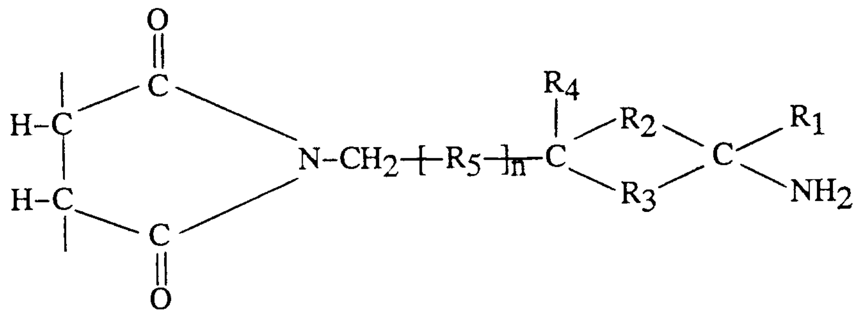

(V)

dans laquelle

$R_1$ représente l'hydrogène ou un groupe alkyle en $C_1$-$C_4$,

$R_2$ et $R_3$, ayant des significations identiques ou différentes, représentent chacun un radical hydrocarboné saturé divalent en $C_1$-$C_6$, la somme des atomes de carbone de ces groupes allant de 3 à 8,

$R_4$ représente l'hydrogène ou un groupe alkyle en $C_1$-$C_4$,

$R_5$ représente un radical hydrocarboné saturé divalent en $C_1$-$C_4$, et

n est égal à 0 ou 1.

**3.** Copolymères selon la revendication 2, caractérisés en ce qu'ils contiennent de 0,3 à 3,0 % en poids de groupes amino primaires sous la forme de motifs de structure, incorporés dans la chaîne polymère, de formule indiquée dans la revendication 2, dans laquelle

$R_1$ représente l'hydrogène ou un groupe méthyle,

$R_2$ et $R_3$, ayant des significations identiques ou différentes, représentent chacun un radical hydrocarboné saturé divalent en $C_1$-$C_5$, la somme des atomes de carbone de ces radicaux allant de 4 à 6,

$R_4$ représente l'hydrogène ou un groupe méthyle,

$R_5$ représente un radical hydrocarboné aliphatique saturé divalent en $C_1$-$C_3$ et

n est égal à 0 ou 1.

**4.** Procédé de préparation des copolymères selon la revendication 1, caractérisé en ce que, dans un premier stade de réaction, on convertit en un copolymère à fonctions anhydride ou anhydride et hydroxy, par copolymérisation radicalaire,

a) 1 à 40 parties en poids de monomères copolymérisables à fonctions anhydride, et

b) 60 à 99 parties en poids d'autres monomères copolymérisables de formules générales II, III et IV

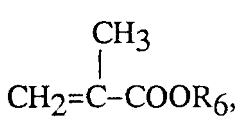

(II)

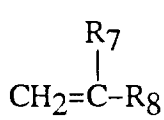

(III)

et/ou

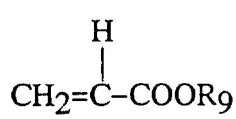

(IV)

dans lesquelles

$R_6$ représente un radical hydrocarboné aliphatique linéaire ou ramifié en $C_1$-$C_{18}$ et/ou un groupe hydroxyalkyle en $C_2$-$C_4$,

$R_7$ représente l'hydrogène, un substituant méthyle, éthyle, le chlore ou le fluor,

$R_8$ représente un radical hydrocarboné aromatique en $C_6$-$C_{12}$, un groupe alcoxy en $C_2$-$C_7$ ou un groupe aminocarbonyle qui peut porter le cas échéant sur l'azote des substituants alkyle en $C_1$-$C_6$ contenant le cas échéant des ponts éther, et

$R_9$ a les significations de $R_6$ sans toutefois obligatoirement être identique à $R_6$,

et, dans un deuxième stade de réaction, on fait réagir le copolymère ainsi obtenu avec des diamines de formule VI

$H_2N\text{-}Q\text{-}NH_2$ (VI)

avec formation de motifs de structure de formule donnée dans la revendication 1, Q ayant les significations indiquées dans la revendication 1, la quantité de diamines mise en oeuvre correspondant à un rapport d'au moins 1:1 entre les équivalents de groupes amino fixés sur un atome de carbone primaire et les équivalents de groupes anhydride d'acide fixés dans le copolymère, et la nature et les proportions relatives des réactifs étant par ailleurs choisies en sorte que les copolymères obtenus contiennent de 0,1 à 4,5 % en poids de groupes amino primaires.

**5.** Procédé selon la revendication 4, caractérisé en ce que l'on utilise en tant que diamines des composés de formule générale VII

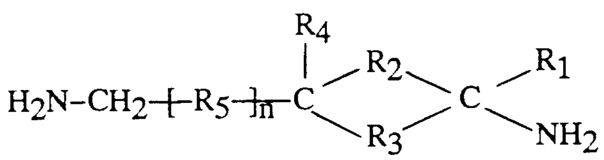

(VII)

dans laquelle

$R_1$, $R_2$, $R_3$, $R_4$, $R_5$ et n ont les significations indiquées dans la revendication 2.

**6.** Procédé selon les revendications 4 et 5, caractérisé en ce que l'on utilise en tant que diamine le 1-amino-3-aminométhyl-3,5,5-triméthylcyclohexane ou le mélange d'isomères consistant en 1-amino-1-méthyl-4-aminométhylcyclohexane et 1-amino-1-méthyl-3-aminométhylcyclohexane.

**7.** Procédé selon les revendications 4 à 6, caractérisé en ce que l'on utilise l'anhydride maléique en tant que monomère à fonctions anhydride.

**8.** Utilisation des copolymères selon les revendications 1 à 3 en tant que liants ou composants de liants pour des produits de revêtement, masses d'étanchéité, colles ou encres d'impression contenant des solvants.